# EUROPEAN PATENT APPLICATION

(11) **EP 1 659 400 A1**
(43) Date of publication of application: **24.05.2006**
(21) Application number: 05076584.1
(22) Date of filing: 12.07.2005
(51) Int. Cl.: G01N 29/24, G01N 29/04, B06B 1/06, G01M 7/02

(54) **Piezotransducer arrays for structural health monitoring**

(30) Priority: 22.11.2004 ES 200402818
(71) Applicant: Gamesa Desarrollos Aeronauticos, S.A., 01510 Miñano (Alava) (ES)
(72) Inventor: Kawiecki, Gregorio, Gamesa Desarrollos Aero., 01510 Minano (Alava) (ES); Pena Macias, Julio, Gamesa Desarrollos Aero., 01510 Minano (Alava) (ES)

(57) **Abstract**

Novel application of piezotransducers to generate elastic waves with shear and longitudinal wave components. A piezotransducer rosette is attached (embedded or surface-bonded) to the monitored structure. This rosette consists of at least three piezotransducers. The entire system may consist of many rosettes. Piezotransducers (3,4 and 5) are activated using an adequate electric signal, for example, a frequency sweep. Activated piezoelements undergo deformations that are transmitted to the structure (1), generating elastic waves that may be used to interrogate the structure. Generated waves characteristics depend on the characteristics of the signals fed to each of the rosette elements.

## Description

### Summary

This invention relates to a novel method of applying piezotransducers to generate elastic waves with shear and longitudinal components by using at least three piezotransducers embedded or surface-bonded to the monitored structure. Development of this new application of a piezotransducer makes it easier to detect damage (cracks, delaminations), to monitor cure level, to measure material characteristics, and so on, in both metallic and composite structures. This system is particularly useful for, although not limited to, damage detection using elastic waves propagation.

### Background of the Invention

There are many patents related to structural health monitoring through detection of anomalies in piezo-generated elastic waves. These systems are based on propagation of a given type of elastic waves, for example, shear waves or bending waves or longitudinal waves (Wang and Varadan, 2002, "Wave propagation in piezoelectric coupled plates by use of interdigital transducer. Part 2: Wave excitation by interdigital transducer," International Journal of Solids and Structures, Vol. 39, pp. 1131-1144). Signal processing and damage detection robustness depends on the quantity and quality of sent and received information. That is why the main effort is focused on both the development of new transducer systems and on the development of better signal processing methods. For example shear waves are particularly sensitive to fiber orientation and ply lay-up (Hsu and Fei, 2002, "Interaction of shear wave with fiber orientations in composite laminate: model and experiment," Adv. Composite Mater., Vol. 11, No. 1, pp. 61-69).

Patent WO 02/062206 A2 discloses a system based on the application of a network of thin piezotransducers attached to a structure and used to send and receive elastic waves. Anomalies in piezo-generated waves propagation can be associated with material damage in wave path. The present invention differs from said system in using rosette piezotransducers. This type of a piezotransducer helps to control better the type of the generated elastic wave when it works in the sender mode and, it makes it possible to acquire more information when it works in the sensor mode.

US Patent No. 2003/0167141 discloses a new system to produce piezogenerated signals. Said system is based on the application of omnidirectional piezotransducers that makes it very difficult to resolve the sent or received signal into shear and longitudinal components.

US Patent No. 6762533 discloses an interdigitated transducer designed to produce just one type of a signal - a shear wave.
A similar system is disclosed in US 6777727 Patent.

US Patent No. US 5440193 "Method and apparatus for structural, actuation and sensing in a desired direction" discloses a directional method of attaching a piezotransducer to the host structure.

Piezotransducers that have been developed so far have only a limited capacity to produce shear and longitudinal waves at the same time. This void has been filled by the present invention, the rosette piezotransducer.

### Description of the invention

The magnitude of anomalies in elastic waves propagation produced by various kinds of damage (cracks, delaminations, corrosion, etc.) depend on the type of damage and the type of the wave. That is why it is important to be able to interrogate the structure with various wave types

A piezotransducer rosette consists of at least three piezoelements embedded or surface-bonded to the monitored structure. These piezoelements may be activated in such a way that they produce a wave with desired shear and longitudinal components.

A piezotransducer rosette, with piezoelements attached at an angle one with respect to another, is entirely equivalent to a strain gage rosette in terms of stress component measurement. Extension or compression of strain gage rosette elements provides information about a two-dimensional stress state at a point (the two normal stress components and a shear stress component). The elements of a piezotransducer rosette may also introduce the three two-dimensional stress tensor components through actuated displacements of its components. It is possible to achieve a better signal resolution if the piezoelements are directionally attached. Application of same-frequency signals with different amplitudes to each of the elements may generate an elastic wave with shear and longitudinal wave components tailored according to the need.

The main advantage of a piezotransducer rosette over other types of piezotransducers is in its capability to generate various types of elastic waves in a controlled manner. This helps to generate and acquire more information than could generate or acquire other piezotransducers, and is particularly useful for damage detection, cure monitoring, etc.

### Brief Description of the Drawings

Accompanying drawings will help to explain the details of the presented invention.
Fig. 1 shows a panel with several surface-bonded rosette piezotransducers.
Fig. 2 depicts the relationship among linear deformations of a rosette piezotransducer elements and the measured or generated stress components.
Fig. 3 visualises the equivalent stress state on a Mohr circle.
Fig. 4 shows the directional piezotransducer attachment.

### Description of the preferred embodiments of the inventory

The system described in this document is devised to improve the effectiveness of methods based on detection and interpretation of anomalies in elastic waves propagation. The methods that will benefit from this invention are, for example, damage detection and cure monitoring techniques. That improvement is possible thanks to the capability of this system to generate, simultaneously or not, various types of elastic waves (in particular: longitudinal and shear waves).

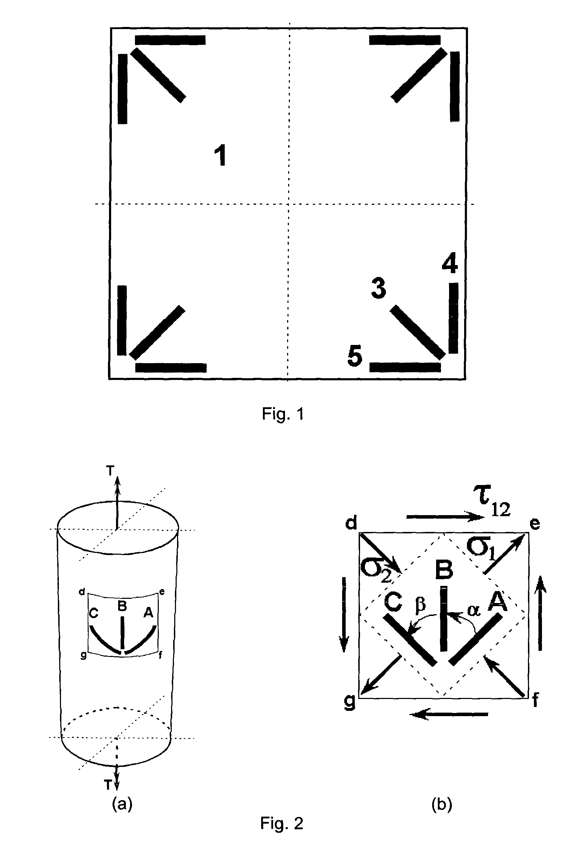

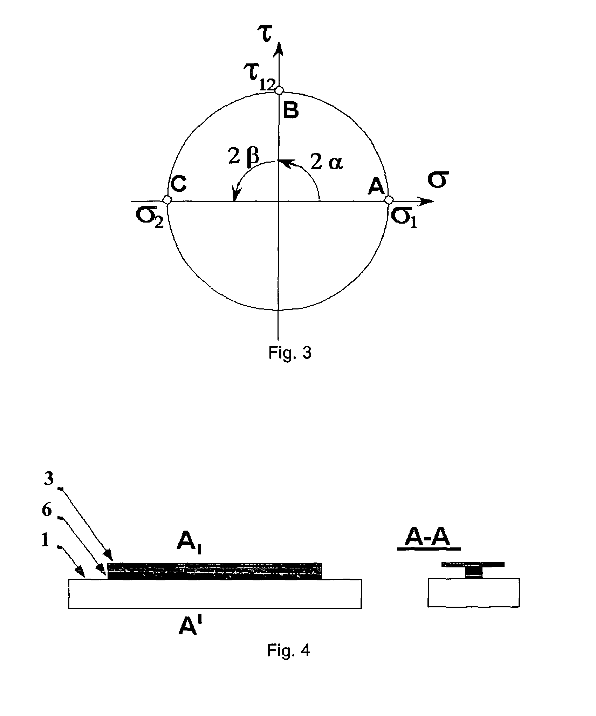

The elements of the piezotransducer rosette are fed with electrical signals that generate linear deformations that, in turn, produce the desired stress state at a given location. For example, assume that the piezotransducer rosette consists of two piezoelements A and C located at an angle of +/- 45 degrees with respect to the central element B (see Figs. 2 and 3). A shear wave will be produced if the element A undergoes an extension by Δ, the element C undergoes a compression by Δ, and the element B does not undergo any deformation at all.

The ability to control individually the piezostrains generated in each of the components of the piezo-rosette makes it possible to combine them in such a way that a desired type of an elastic wave, with the desired amplitude and frequency is produced.

Fig. 1 presents a sample distribution of four three-element (3,4,and 5) piezotransducer rosettes on a panel. These piezotransducers can be surface-bonded or embedded in the structure (1) to monitor. Locating these transducers at panel corners will improve robustness of the system.

Fig. 2 shows the relationship between the linear deformations of the actuators and the corresponding states of stress, whether measured or generated. The drawing (a)presents a piezotransducer rosette consisting of three components A, B and, C surface-boded to a cylinder subjected to a torsional load. Although the arrangement of the piezorosette elements makes it possible to measure the state of stress only at the intersection of the longitudinal axes of the elements, it is assumed that the entire area "degf' is subjected to the same stress state. The drawing (b) shows that the state of pure shear stress on the faces of the depicted square is equivalent to the principal stress state on the faces of the square parallel A and C transducers. That is, the pure shear stress τ12 that can be measured at the faces of the area "deqf" is equivalent to a state of a biaxial stress with components σ1 and σ2. Here, α and β indicate the orientation of piezoelements A and C with respect to the piezoelement B. In this particular case, α = β = 45° but, theoretically, these angles can take any value between 0° and 180°.

Fig. 3 presents the Mohr circle corresponding to the stress state shown in Fig. 2.

Fig. 4 shows the principle of directional attachment of piezoactuators (3) through the glue line (6) to the base structure (1).

### The system described in this patent includes:

A distributed network of of piezotransducers attached to the structure to be monitored and consisting of at least one rosette surface-bonded or embedded in the structure. A system to generate electrical signals con phase differences needed to generate the desired stress state.

### The method described in this patent includes:

Installation of a network of piezotransducers distributed over the structure to be monitored.
Generation of electrical signals with differences in phase necessary to produce the combination needed to produce the desired state of stress.
Generation of elastic waves with desired characteristics, using the described rosette piezotransducer system.

## Claims

1. Novel application of piezotransducers consisting of at least three piezoelements attached (surface-bonded or embedded) to the monitored structure, if possible and necessary, in a directional manner and capable to produce elastic waves with shear and normal components.

2. Novel application of piezotransducers, in agreement with the claim 1, **characterized by** the components of the piezotransducer being grouped and fixed by a determinate angle between themselves forming a rosette.

3. Novel application of piezotransducers, in agreement with the preceding claims, **characterized by** comprising a method to interrogate the structure through generating transducer deformations so as to produce the desired state of stress.

4. Novel application of piezotransducers, in agreement with the preceding claims, **characterized by** the appropriate control of the transducers activation produces a desired stress state on them.

5. Novel application of piezotransducers, in agreement with the preceding claims, such that the piezotransducers can be used for damage detection, perform cure monitoring, or/and measure the material characteristics of parts made of metal or composite.
